# EUROPEAN PATENT SPECIFICATION

(11) **EP 1 914 384 B1**
(45) Date of publication and mention of the grant of the patent: **25.06.2014**
(21) Application number: 07254053.7
(22) Date of filing: 12.10.2007
(51) Int. Cl.: F01D 5/34, F01D 5/22

(54) **Fan with blades, band and unitary disc**
Fan mit Schaufeln, Band und einheitlicher Rotorscheibe
Fan avec aubes, bande et disque unitaire

(30) Priority: 12.10.2006 US 548745
(43) Date of publication of application: 23.04.2008
(73) Proprietor: GENERAL ELECTRIC COMPANY, Schenectady, NY 12345 (US)
(72) Inventor: Loehle, Kenneth, Lynn, Massachusetts 01904 (US); Christopherson, Charles K., Andover, Massachusetts 01810 (US); Wessels, Jeffrey F., Cincinnati, Ohio 45243 (US); Huffman, James A., Topsfield, Massachusetts 01983 (US); Turner, Alan Glen, Cincinnati, Ohio 45215 (US); Trewiler, Gary Edward, Loveland, Ohio 45140 (US)
(74) Representative: Bedford, Grant Richard

(56) References cited:
- EP-A2- 0 900 920
- US-A- 2 472 886
- US-A- 3 297 301
- US-A- 3 451 654
- US-A- 3 588 980
- US-A- 4 257 741
- US-A- 5 137 426
- US-A- 5 522 705
- US-A- 5 562 419

## Description

In an aircraft gas turbine (jet) engine, air is drawn into the front of the engine, compressed by a shaft-mounted compressor, and mixed with fuel. The mixture is combusted, and the resulting hot combustion gas is passed through a turbine mounted on the same shaft. The flow of gas turns the turbine by contacting an airfoil portion of the turbine blade, which turns the shaft and provides power to the compressor. The hot exhaust gases flow from the back of the engine, driving it and the aircraft forward. There may additionally be a bypass fan that forces air around the center core of the engine, driven by a shaft extending from the turbine section.

The compressor, the turbine, and the bypass fan have a similar construction. They each have a rotor assembly included in a rotor disk and a set of blades extending radially outwardly from the rotor disk. The compressor, the turbine, and the bypass fan share this basic configuration. However, the materials of construction of the rotor disks and the blades, as well as the shapes and sizes of the rotor disks and the blades, vary in these different sections of the gas turbine engine. Each rotor blade includes an airfoil and a dovetail at its root, with the dovetail being radially retained in a complementary slot in the perimeter of the disk. The dovetails must be suitably configured and sized for supporting the blades with a suitably low level of stress for obtaining a useful life in operation.

In some gas turbine engine designs, the conventionally known radius ratio and blade solidity are such that the blades are disposed relatively close together around the perimeter of the disk, with the disk being relatively small in diameter compared to the airfoils which results in the inability of conventional dovetail designs to carry centrifugal loading at suitable levels of stress for enjoying a useful service life. Accordingly, the airfoils are manufactured integrally with the disk in a one-piece component conventionally known as a bladed disk or a blisk, also sometimes known as an "integrally bonded rotor" or IBR. A blisk is typically manufactured from a one piece solid forging which is conventionally machined using either a mill or electrochemical machining (ECM) electrodes. With the blades being integral with the disk, satisfactory levels of stress may be obtained in the blisk during operation for obtaining a useful life.

The primary technique for making fan blisks that are aeromechanically stable is to increase the relative thickness of the blades. The thickness is measured in thickness divided by chord, or tm/c. As a result of the increased thickness of the blades, the airfoil must support more weight, thus the thickness of the blisk and fan case are likewise increased in order to provide adequate support for the extra airfoil material. As a result of the increased tm/c, the engine may experience performance penalties.

A continuous shroud in a blisk poses numerous manufacturing problems since the shroud itself significantly limits access to the region of the inner airfoils and inner diameter of the shroud itself which are formed by removal of material from the original solid forging. In order to reduce the drawbacks associated with continuous shrouds on blisks, part span shrouds are used on bladed designs. In this arrangement, the blades are separate and attached to the blisk with dovetails. Often dovetail stresses from a bladed design are too high for a feasible design, and the engines may utilize hollow and hybrid blades for weight reduction. However, hollow and hybrid blades suffer from the drawback that these parts are expensive, and have larger tm/c values for the stability margin. Further, the hollow and hybrid blades are also not practical for medium sized engines. Further still, manufacturing challenges prevent the part shrouds from being used on blisks.

Therefore, what is needed is a fan blisk with an integral part span shroud that avoids weight and performance penalties associated with a conventional non-shrouded blisk. The present invention addresses this need, and further provides related advantages.

US 5,562,419 relates to a shrouded fan blisk having features according to the preamble of claim 1.

US 3,588,980 relates to a method for making a contoured article, such as a turbomachinery blade or vane.

An aspect of the invention is directed to a fan blisk according to claim 1 herein.

One advantage of various aspects of the present invention is the increased aeromechanical stability of the blisk apparatus by use of a part span shroud.

Another advantage of various aspects of the present invention is the reduced thickness of the airfoils, reducing weight and improving blisk aerodynamic performance.

Another advantage of various aspects of the present invention is the location of the shroud welds that avoid the high stress areas of the blisk, which increases the reliability of the apparatus.

An additional advantage of various aspects of the present invention is improved fan efficiency, avoided weight penalties, and an improved stall margin as compared to an unshrouded blisk.

Another advantage of various aspects of the present invention is that the apparatus functions substantially as an unshrouded blisk, having the benefits of easier maintenance, but with the performance advantages set forth above.

Various features and advantages of the present invention will be apparent from the following more detailed description of the preferred embodiment, taken in conjunction with the accompanying drawings which illustrate, by way of example, the following:

Figure 1 is an illustration of the part span shroud on a fan blisk, according to an embodiment of the invention which however is not claimed.

Figure 2 is an alternative view of the fan blisk of Fig. 1.

Figure 3A is a perspective view of an alternate welding configuration on the part span shroud of a fan blisk according to the embodiments of the invention which however is not claimed.

Figure 3B is a front view of the part span shroud of Fig. 3A.

Figure 4 is a perspective view of an alternate embodiment of the invention which however is not claimed.

Figure 5 is an alternate view of the embodiment of Fig. 4.

Figure 6 is an alternate view of the embodiment of Fig. 4.

Figure 7 is an illustration of an alternate embodiment of a part span shroud welding configuration which however is not claimed.

Figure 8 is an illustration of an embodiment of the present invention with only one weld connection which however is not claimed.

Figure 9 is an illustration of an embodiment of the present invention with a weld connection substantially parallel to the shroud interface.

Figure 10A is an illustration of an embodiment of the present invention where the airfoils are attached in pairs which however is not claimed.

Figure 10B is an alternate view of Figure 10A where the shroud segments are connected before the airfoils are attached to the blisk which however is not claimed.

Wherever possible, the same reference numbers will be used throughout the drawings to refer to the same or like parts.

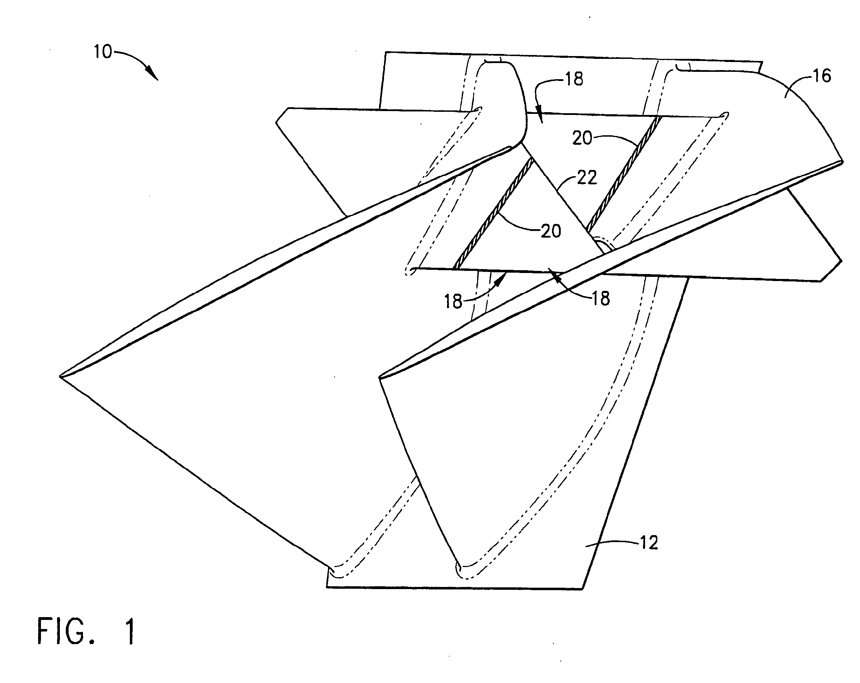

Figures 1, 2, 3A and 3B illustrate various embodiments of the present invention which however is not claimed. The present invention is directed to a part span shrouded blisk 10 that increases the stability of a fan blade while decreasing the overall weight associated with higher stability blisks. Figure 1 shows a blisk 10 according to an embodiment of the invention showing shroud segments 18 disposed between airfoils 16 with weld connections 20 disposed substantially parallel to each other and in areas of lower stress on the part span shroud. The part span shroud segments 18 are secured with the weld connections 20 such that the weld connections are in a full line of sight and closer to the airfoils 16. The weld connections at this location on the shroud segments 18 provides a clear line of sight for implementing the weld connection, which creates an easier installation and implementation of the shroud segments 18 and weld connections 20 on the airfoils 16.

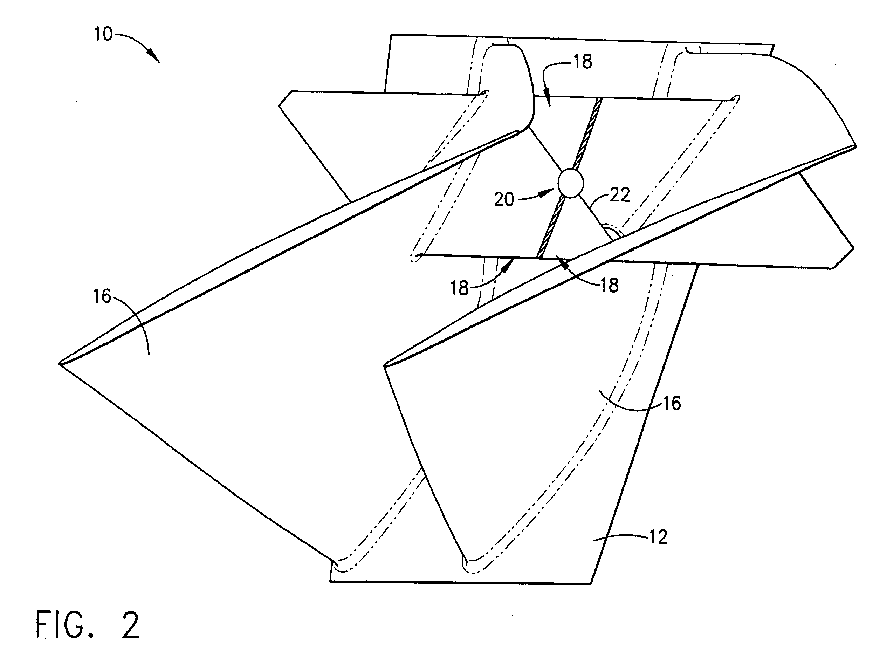

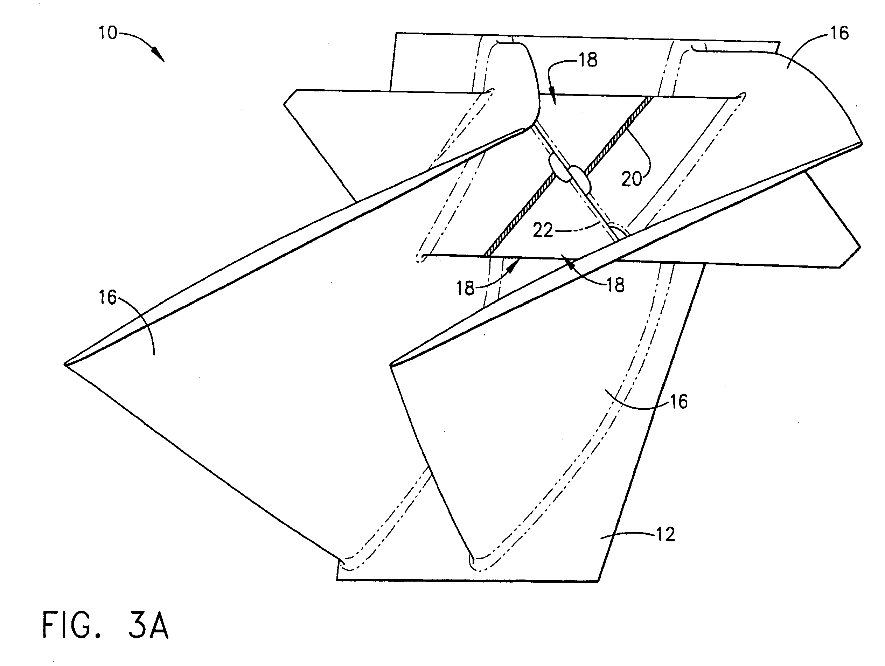

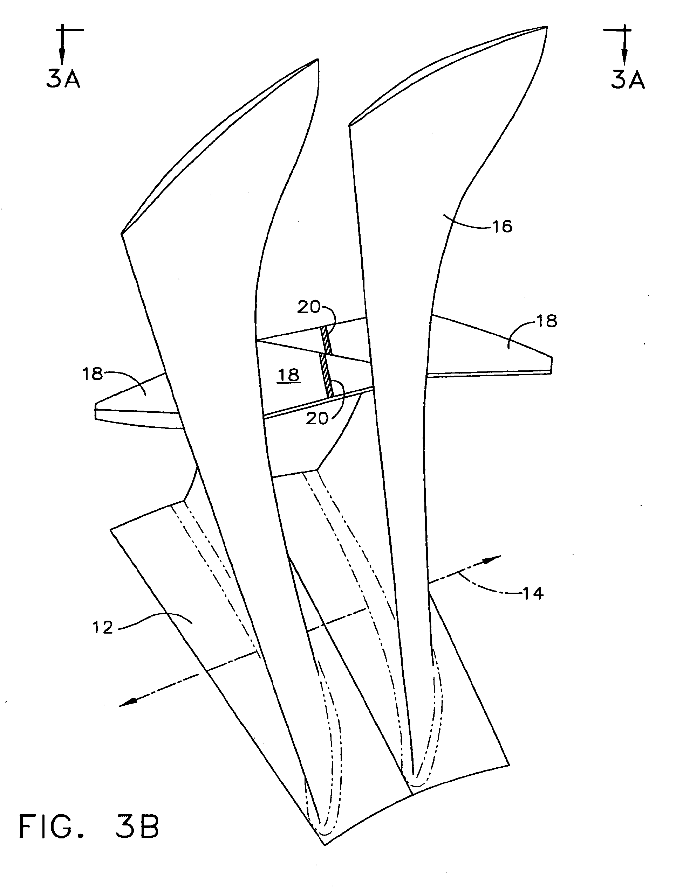

Figure 2 shows a prospective view of the blisk 10 according to an embodiment of the invention which however is not claimed showing shroud segments 18 disposed between airfoils 16 with weld connections 20 disposed at approximately halfway between the airfoils 16. With the weld connection 20 placed at this location, the weld is away from the fillet where the airfoil 16 meets the part span shroud. Figure 3A shows another prospective view a blisk 10 according to an embodiment of the invention showing shroud segments 18 disposed between airfoils 16 with weld connections 20 disposed between the airfoils 16 such that the weld connections 20 are substantially parallel to each other, but offset from the center of the area between the airfoils 16 to facilitate the weld process. Figure 3B shows a front view of a blisk 10 configuration according to one embodiment of the invention showing shroud segments 18 disposed between airfoils 16 with weld connections 20 disposed where the shroud segments 18 attach to the airfoils 16.

Referring to Figures 1, 2, 3A and 3B, the blisk 10 includes a disk 12 or disk body, and a plurality of circumferentially spaced apart blade airfoils 16 extending integrally radially outwardly from the disk 12. A plurality of shroud segments 18 are disposed circumferentially radially between the blade airfoils 16, and connect thereto to increase the aeromechanic stability of the blades 16 on the blisk 10. A welded connection 20 secures each of the plurality of shroud segments 18 to the blade airfoils 16 and to the other shroud segments 18. The weld connections 20 on the shroud segments 18 may include attachments resulting from welding processes including but not limited to, electron beam welding, laser welding, friction stir welding, induction welding, solid state welding and diffusion bonding and are located on the shroud segments 18 to avoid high stress areas. In addition, a plurality of coated wear surfaces 22 are disposed between the shroud segments 18 to prevent excessive wear on the shroud segments 18. The excessive wear on the shroud segments 18 can occur during operation of the blisk, when vibrations caused by the rotation of the disk 12 and blades 16, causing the shroud segments 18 to rub against each other. The disk 12, airfoils 16, shroud segments 18 and weld connections 20 collectively form an integral or one-piece assembly.

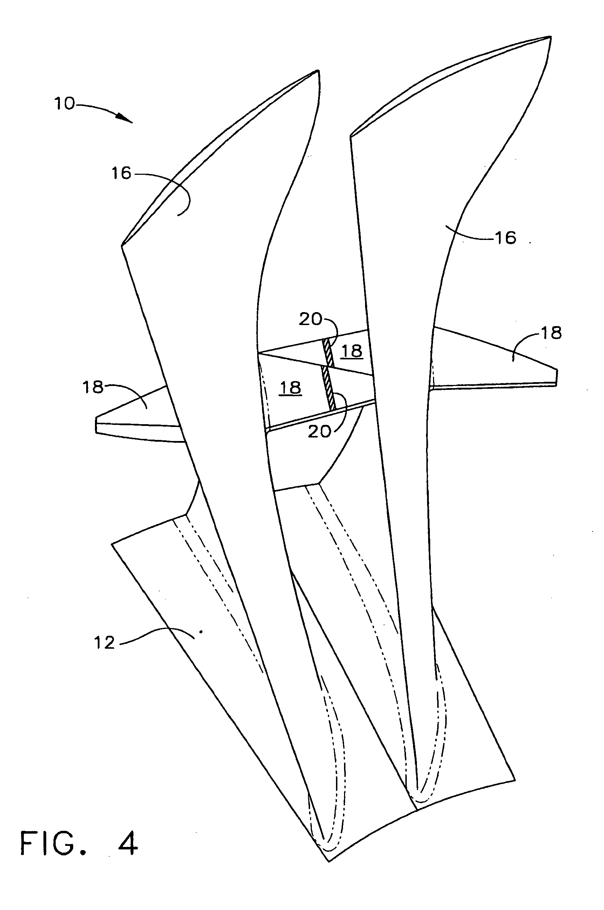

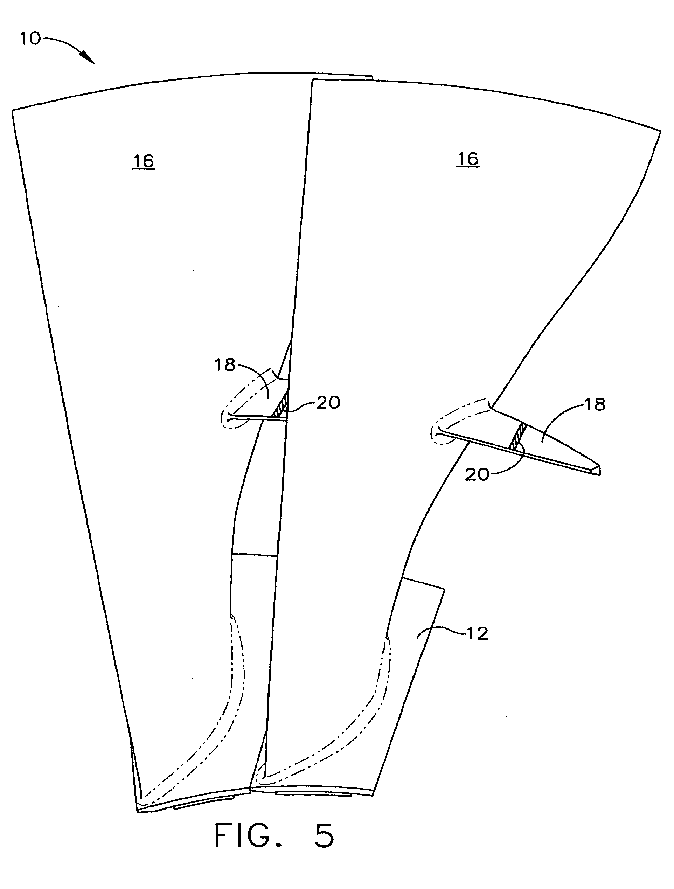

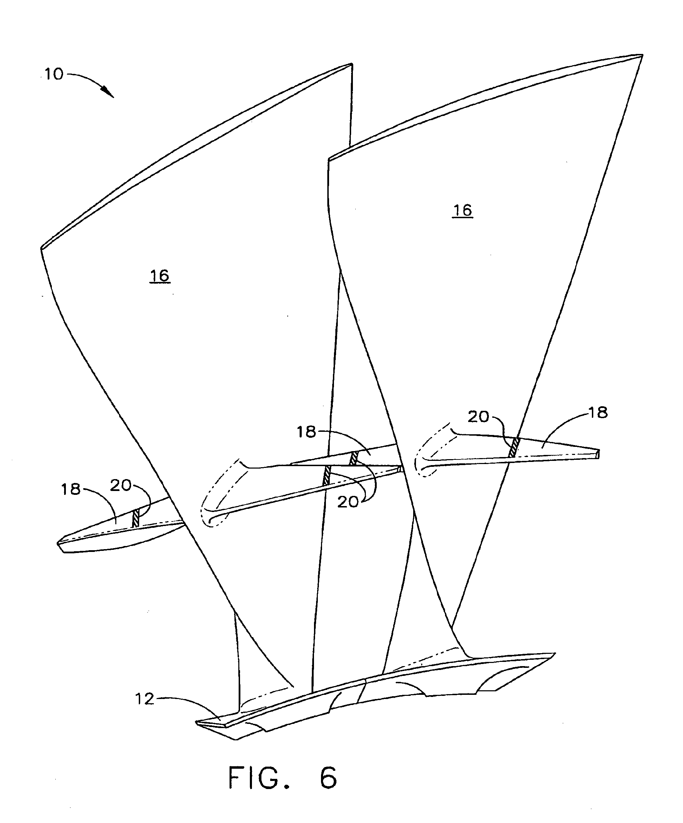

Figures 4, 5 and 6 are side views of a portion of a blisk 10 according to another embodiment of the present invention which however is not claimed with the part span shroud segments 18 connected to the blades 16. Figure 4 shows a front view of a blisk 10 configuration according to one embodiment of the invention showing shroud segments 18 disposed between airfoils 16 with weld connections 20 disposed where the shroud segments 18 attach to the airfoils 16. Figure 5 shows an angled front view of a blisk 10 configuration according to one embodiment of the invention which however is not claimed showing shroud segments 18 disposed between airfoils 16 with weld connections 20 disposed where the shroud segments 18 attach to the airfoils 16. Figure 6 shows a rear view of a blisk 10 configuration according to one embodiment of the invention which however is not claimed showing shroud segments 18 disposed between airfoils 16 with weld connections 20 disposed where the shroud segments 18 attach to the airfoils 16. The blisk 10 includes in accordance with an embodiment of the present invention a plurality of discrete part-span shroud segments 18 each disposed circumferentially between and bridging a respective pair of blade airfoils 16. The welded connections 20 of the shroud segments 18 to the blade airfoils 16 are disposed in areas that avoid the high stress areas of the shroud segments 18.

One embodiment of the present invention includes a method for making the blisk 10 according to the present invention which however is not claimed by attaching the blade airfoils 16 to the disk 12 first, and then securing the shroud segments 18 to the blade airfoils 16 after the airfoils 16 are secured. The blade airfoils 16 may be attached to the disk 12 by any suitable attachment method known in the art, including but not limited to translation friction welding, electron beam welding, induction welding, solid state welding and forming the disk 12 and airfoil from the same piece of material. The blade airfoils 16 and the shroud segments 18 may be attached by a weld connection 20 with a modified shroud interface orientation, which provides a more producible weld during the assembly of an embodiment of the present invention. Another suitable location for the weld connection 20 on the shroud 18 may be closer to the airfoils 16, which provides better interfaces with the adjacent shroud, and provides better shroud-to-shroud interface alignment.

An alternate embodiment of the present invention is where the shroud segments 18 are integral with the blade airfoils 16. The blade airfoils 16 are secured to the disk with translational friction welding or any other suitable attachment process. The shroud segments 18 are coated with a coating known in the art for blade airfoil 16 surfaces. For example, the coating may be made of tungsten carbide, or may be a brazed on wear pad. This embodiment may also include having every other shroud segment 18 split into a plurality of shroud segments, preferably two segments. The blades 16 are then secured one at a time to the disk with translational friction weld connections. The adjacent blades 16 need to be elastically bent out of the way during the translational friction weld process to avoid interference. While no shroud welds are necessary for this configuration, alternatively, induction welding or some other joining method may be used to attach the integral blade to the blisk hub.

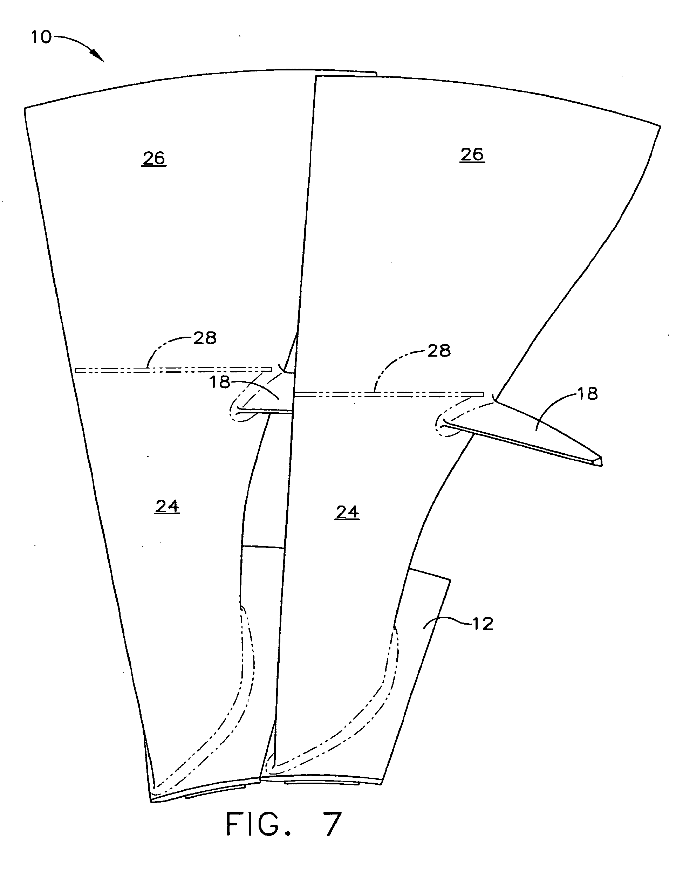

Another alternate embodiment of the present invention which however is not claimed is shown in Figure 7, where the blade airfoils 16 have two sections, a first section 24 and a second section 26, with a connection junction 28 between the two. Each of the first section 24 and second section 26 being airfoil components, when joined at the connection junction 28 forming a full airfoil. The first section 24 of the airfoils 16 is attached to the disk 12 or machined integral with the disk 12 first. Then the part span shroud segments 18 are attached to the first section of the airfoils 16, then the second section 26 of the airfoils 16 are attached last. The attachments are made by machining the first section 24 of the blades 16 and the shroud segments 18 to the disk 12, then using a weld connection 20 to attach the second section 26 of the blade airfoils 16. Another attachment used for this embodiment is to machine the first section 24 of the blade 16, then using weld connections 20 for securing the shroud segments 18 and the second sections 26 of the blade. This process is repeated around the disk 12 to form a blisk. This embodiment allows for easy attachment of the shroud segments by conventional welding techniques.

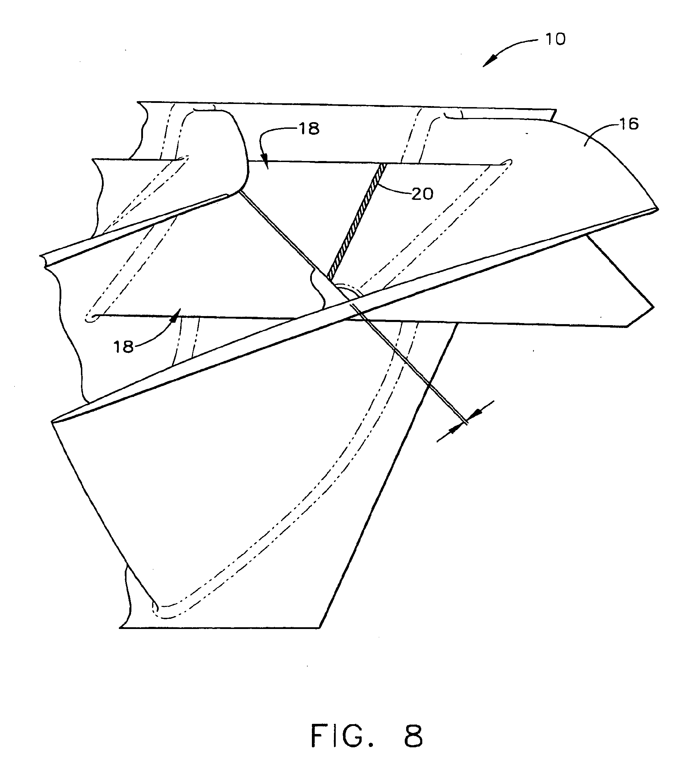

Yet another embodiment of the present invention which however is not claimed is shown in Figure 8, where only one weld connection 20 is applied to the shroud segments 18. The weld connection 20 is applied substantially perpendicular to the edge of the shroud segment 18. A gap clearance must be maintained from the adjacent shroud 18 without the weld connection during application of the weld 20. The shroud segment 18 without the weld may be either removed or deflected during the welding process if necessary. The gap clearance provides clearance from the adjacent airfoil and shroud during translation friction welding the airfoil 16 to the hub.

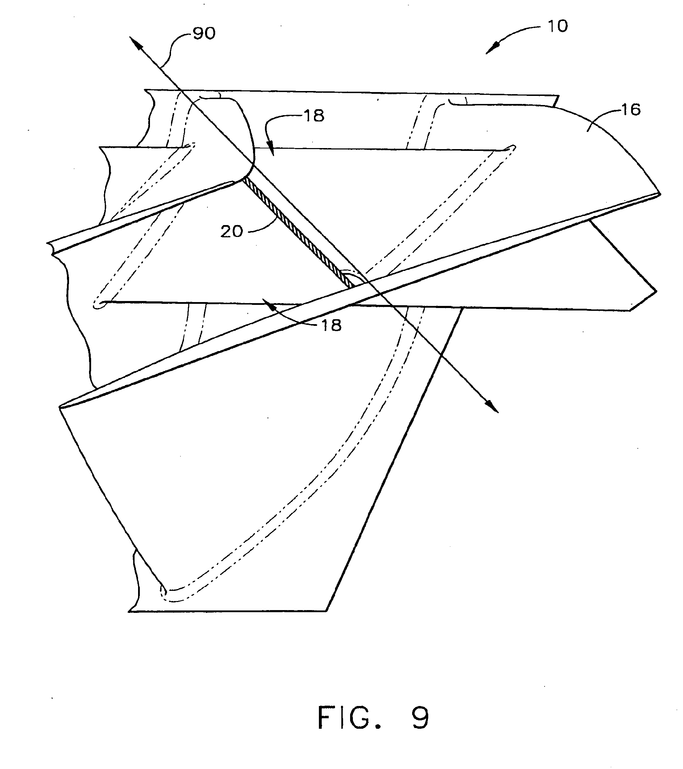

An embodiment of the present invention is shown in Figure 9, where a weld connection 20 is placed on the shroud 18 substantially perpendicular to the airfoil 16. The weld 20 is substantially parallel to the shroud interface between the shroud segments 18. Line 90 illustrates the direction of translation for the translation friction weld process of this configuration. The airfoils 16 may be deflected during the weld process for clearance from the adjacent airfoil. This configuration assumes a tolerance substantially perpendicular to the axis of translation of the shroud 18 and avoids welds in the shroud.

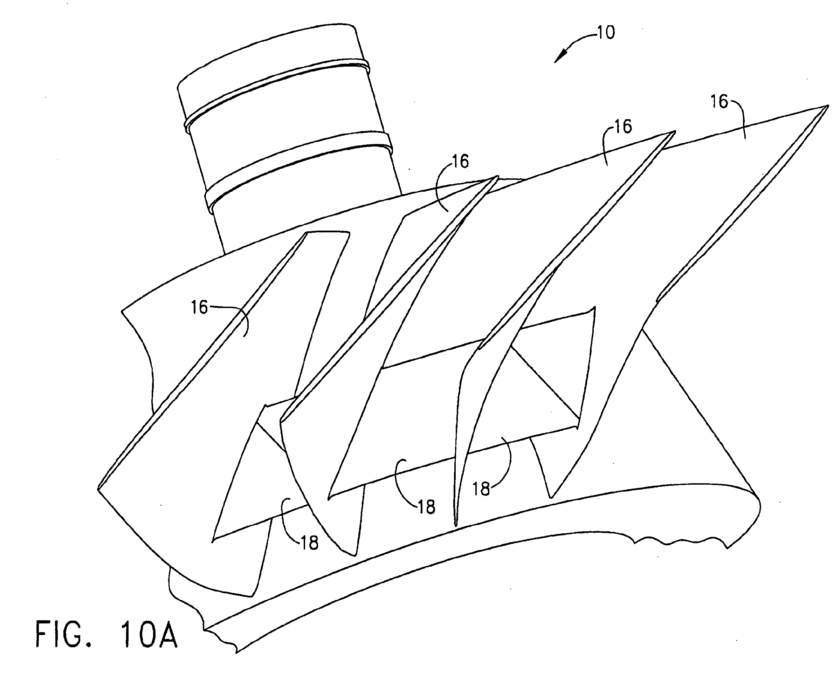

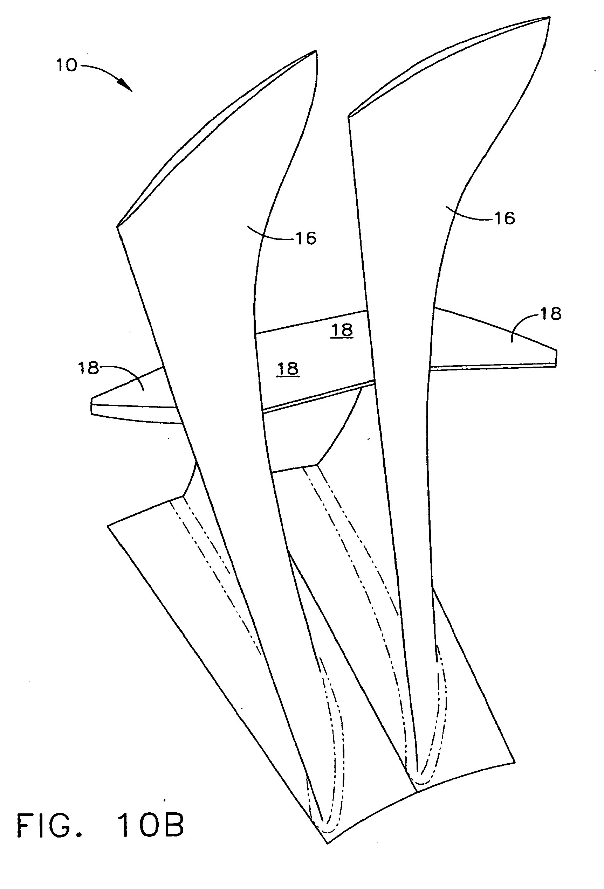

Figure 10A illustrates another alternative configuration of an embodiment which however is not claimed of the present invention. The airfoils 16 are attached to the disk 12 in pairs, or two at a time. The shroud segments 18 are coated with a wear coating at every other interface only since the blade airfoils 16 are attached two at a time. In addition, every other shroud segment 18 has a clearance gap for the translational friction weld clearance. The shroud 18 is only disposed there to avoid aeromechanic excitation from non-uniform wake disturbance. The shroud segments 18 are joined before the pair of blade airfoils 16 are attached to the disk 12, as shown in figure 10B.

Another embodiment of the present invention which however is not claimed is to utilize weld connections 20 for the shroud segments 18 and the blade airfoils 16, but leaving gaps between the shroud segments. The shroud-to-shroud gap has an assembled wear surface between the two shroud pieces. This shroud-to-shroud gap provides damping during blade vibrations and prevents hoop stresses that occur in when the shrouds are connected as a continuous ring. The wear surfaces 22 are secured after the shroud segments 18 and blade airfoils 16 have been secured. This is repeated around the disk 12 to form the blisk 10.

Yet another embodiment of the present invention which however is not claimed is to leave a gap between the shroud segments 18 and assembling a type of wear surface 22 to fit in the gap. This embodiment provides the option for not using a weld connection 22 to secure the shroud 18 to the blade airfoil 16. This embodiment provides the stiffness the airfoils require for operation, and also increases the first flex frequency. In addition, the gap provides blade-to-blade damping that reduces stresses in the shroud and blade airfoils 16. Also, the process of leaving the gap between the shroud 18 and then later assembling the wear surface in the gap provides easier assembly of the apparatus, as the shrouds 18 are not in danger of making contact with one another during the welding process.

Another embodiment of the present invention which however is not claimed is to machine the entire blisk 10 apparatus from one material, using no weld connections 20. The blisk 10 is manufactured from a metal material such as titanium or any other suitable metal material. The shrouds 18 can be machined integrally to the airfoils as one solid piece, and form a continuous ring. In this embodiment, a wear surface 22 may be omitted. In addition, the shroud 18 could be machined as one solid piece, but each shroud segment 18 may have a gap where the gap is sufficiently large to ensure that the edges of the shroud 18 do not contact each other. A wear surface 22 can also be used that is assembled to fit into the gap between the shroud segments 18 to provide damping. As in the other embodiments, the gap eliminates any hoop stresses on the shrouds 18 and blade airfoils 16. The shroud 18 provides aeromechanical stiffness to the blade airfoils 16. Machining the blisk 10 from a single solid piece eliminates the need for wear surfaces 22.

Another embodiment of the present invention would be to construct the part span shrouded blisk 10 using composite materials and composite manufacturing techniques. The blisk 10 may be constructed of natural fiber substrates, fiberglass substrates, open cell foams, closed cell foams, vinyl, and any other suitable composite. The composite manufacturing techniques may include resin transfer molding, filament winding, autoclaving, pultrusion, hot pressing, wet layup, carbon pyrolysis, braiding or any other suitable technique. Characterization capabilities include ultrasonics, acoustic emission, X-radiography, infrared thermography, eddy current, thermal analysis, microscopy and any other suitable characterization. Composite materials performance is evaluated with a comprehensive array of testing equipment such as servo-hydraulic and screw-driven load frames, a high-rate servo-hydraulic load frame with high speed laser flash video recording, high temperature creep frames, an instrumented drop-weight impact tester, environmentally-controlled wear testers, a vacuum-ready flywheel spin chamber and any other suitable evaluation method or system.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A fan blisk comprising:
a disk (12) body having a substantially circular geometry;
a plurality of circumferentially spaced apart airfoils (16) extending radially outwardly from the disk (12) body, each airfoil being secured to the disk (12) body;
a plurality of shroud segments (18), each shroud segment being disposed circumferentially between the plurality of airfoils (16) and configured to attach to a corresponding airfoil of the plurality of airfoils (16); **characterised in that**:
each shroud segment of the plurality of shroud segments (18) is attached to another shroud segment of the plurality of shroud segments by a weld connection (20); wherein each shroud segment (18) is a part span shroud segment (18); wherein the weld connection (20) extends substantially perpendicular to a respective airfoil of the plurality of airfoils.

2. The fan blisk of any preceding claim, wherein the plurality of shroud segments (18) and the plurality of airfoils (16) are a continuous piece that are attached to the corresponding airfoil by weld connections (20).

3. The fan blisk of any preceding claim, wherein the weld connection is a diffusion bond.

4. The fan blisk of any preceding claim wherein the disk (12) body, the plurality of airfoils (16), and the plurality of shroud segments (18) are manufactured from a composite material.

## Patentansprüche

1. Fan-Integralrotor, umfassend:
einen Körper einer Scheibe (12), der eine im Wesentlichen kreisförmige Geometrie aufweist;
eine Vielzahl von in Umfangsrichtung voneinander beabstandeten Flügeln (16), die sich radial von dem Körper der Scheibe (12) nach außen erstrecken, wobei jeder Flügel an dem Körper der Scheibe (12) gesichert ist;
eine Vielzahl von Abdecksegmenten (18), wobei jedes Abdecksegment in Umfangsrichtung zwischen der Vielzahl von Flügeln (16) angeordnet ist und dafür eingerichtet ist, an einem korrespondierenden Flügel der Vielzahl von Flügeln (16) angebracht zu sein; **dadurch gekennzeichnet, dass**:
jedes Abdecksegment der Vielzahl von Abdecksegmenten (18) an einem anderen der Abdecksegmente der Vielzahl von Abdecksegmenten durch eine Schweißverbindung (20) angebracht ist; wobei jedes Abdecksegment (18) ein Teilbereich-Abdecksegment (18) ist; wobei die Schweißverbindung (20) sich im Wesentlichen senkrecht zu einem entsprechenden Flügel der Vielzahl von Flügeln erstreckt.

2. Fan-Integralrotor gemäß einem der vorhergehenden Ansprüche, bei dem die Vielzahl von Abdecksegmenten (18) und die Vielzahl von Flügeln (16) ein kontinuierliches Stück sind, die an den korrespondierenden Flügeln durch Schweißverbindungen (20) angebracht sind.

3. Fan-Integralrotor gemäß einem der vorhergehenden Ansprüche, bei dem die Schweißverbindung eine Diffusionsverbindung ist.

4. Fan-Integralrotor gemäß einem der vorhergehenden Ansprüche, bei dem der Körper der Scheibe (12), die Vielzahl von Flügeln (16) und die Vielzahl von Abdecksegmenten (18) aus einem Verbundmaterial hergestellt sind.

## Revendications

1. Un disque aubagé monobloc de ventilateur comprenant :
un corps de disque (12) ayant une géométrie globalement circulaire ;
une pluralité de profilés (16) espacés circonférentiellement les uns des autres s'étendant radialement vers l'extérieur du corps de disque (12),
chaque profilé étant fixé au corps de disque (12) ;
une pluralité de segments de virole (18), chaque segment de virole étant disposé circonférentiellement entre la pluralité de profilés (16) et configuré pour être attaché à un profilé correspondant de la pluralité de profilés (16) ;
**caractérisé en ce que** :
chaque segment de virole de la pluralité de segments de virole (18) est attaché à un autre segment de virole de la pluralité de segments de virole par une connexion par soudure (20) ; dans lequel chaque segment de virole (18) est un segment de virole (18) à envergure partielle ; dans lequel la connexion par soudure (20) s'étend globalement perpendiculairement à un profilé respectif de la pluralité de profilés.

2. Le disque aubagé monobloc de ventilateur d'une quelconque revendication précédente, dans lequel la pluralité de segments de virole (18) et la pluralité de profilés (16) sont une pièce continue qui sont attachés au profilé correspondant par des connexions par soudure (20).

3. Le disque aubagé monobloc de ventilateur d'une quelconque revendication précédente, dans lequel la connexion par soudure est une liaison par diffusion.

4. Le disque aubagé monobloc de ventilateur d'une quelconque revendication précédente dans lequel le corps de disque (12), la pluralité de profilés (16), et la pluralité de segments de virole (18) sont fabriqués à partir d'un matériau composite.
